Europäisches Patentamt

European Patent Office

Office européen des brevets

(11) Veröffentlichungsnummer: **0 468 241 A2**

(12) **EUROPÄISCHE PATENTANMELDUNG**

(21) Anmeldenummer: **91111076.5**

(22) Anmeldetag: **04.07.91**

(51) Int. Cl.5: **A46B 13/02**

(30) Priorität: **17.07.90 DE 4022642**

(43) Veröffentlichungstag der Anmeldung:
**29.01.92 Patentblatt 92/05**

(84) Benannte Vertragsstaaten:
**AT BE CH DE ES FR GB IT LI LU NL**

(71) Anmelder: **Braun Aktiengesellschaft**

**W-6000 Frankturt am Main(DE)**

(72) Erfinder: **Meyer, Werner**
**Frankturter Strasse 25**
**W-6231 Schwalbach(DE)**
Erfinder: **Giersiepen, Martin, Dr.**
**Altkönigstrasse 15**
**W-6370 Oberursel(DE)**

(54) **Ladeschaltung für eine akkubetriebene elektrische Zahnbürste.**

(57) Ein gleichstrombetriebenes Gerät 10, insbesondere eine Zahnbürste weist einen wiederaufladbaren Akkumulator 12 und Mittel 14, 16 zum Anschluß an die Ausgänge einer Ladeeinheit 18 auf, die ihrerseits von einer Wechselspannung 24 gespeist wird. In der Ladeeinheit 18 sind Mittel 20 zur symmetrischen Begrenzung der Ausgangswechselspannung 26 vorgesehen. Das elektrische Gerät 10 weist Gleichrichtermittel 22 auf. Durch geeignete Dimensionierung der Begrenzungsmittel 20 wird durch diese Beschaltung eine erhebliche Verringerung der Korrosion der Verbindungskontakte zwischen dem Gerät 10 und der Ladeeinheit 18 erzielt.

Die Erfindung betrifft ein gleichstrombetriebenes elektrisches Gerät, wie eine Zahnbürste, einen Rasierapparat, ein Haarpflegegerät, Küchenkleingeräte oder ähnliches mit einem wiederaufladbaren Akkumulator und mit Mitteln zum Anschluß an die Ausgänge einer Ladeeinheit, die ihrerseits von einer Wechselspannung gespeist wird.

Ein solches Gerät ist bereits aus der US-PS 3 274 631 bekannt. Obwohl sich diese netzunabhängig betreibbaren Geräte in der Praxis durchaus bewährt haben, tritt insbesondere bei der bekannten Zahnbürste folgendes Problem auf. Während des Ladevorganges, bei dem die Anschlußmittel der Zahnbürste mit den Ausgängen der Ladeeinheit verbunden sind, weisen die elektrischen Verbindungen ein unterschiedliches Gleichspannungspotential auf. Insbesondere bei Zahnbürsten, bei denen nicht auszuschließen ist, daß die Anschlußmittel wie auch die Anschlüsse der Ladeeinheit mit Wasser oder auch Zahnputzmittel benetzt sind, besteht die Gefahr einer raschen Korrosion der Kontakte der Anschlußmittel bzw. Anschlüsse. Unter Korrosion soll im weiteren die Zerstörung von Metall durch chemische oder elektrochemische Reaktionen mit seiner Umgebung verstanden werden. Diese Korrosion der Kontakte wird insbesondere dadurch begünstigt, daß die Kontakte während des Ladevorganges des Akkumulators des elektrischen Gerätes ein unterschiedliches Gleichspannungspotential aufweisen. Der Erfindung liegt das Problem zugrunde, die geschilderten Nachteile des bekannten Standes der Technik zu vermeiden.

Dieses Problem wird durch ein Gerät mit den eingangs erwähnten Merkmalen gelöst, bei dem die Ladeeinheit Mittel zur symmetrischen Begrenzung der Ausgangswechselspannung und das elektrische Gerät Gleichrichtermittel aufweist. Durch diese Maßnahme wird während des Ladevorganges sichergestellt, daß die Kontakte der Anschlußmittel des elektrischen Gerätes sowie die Ausgänge der Ladeeinheit eine sich zeitlich zum Beispiel im 50 Hz-Takt ändernde Potentialdifferenz aufweisen, wodurch offenbar die Korrosionsanfälligkeit erheblich herabgesetzt wird. Dadurch, daß in dem elektrischen Gerät Gleichrichtermittel vorgesehen sind, ist dennoch eine Aufladung des Akkumulators möglich. Eine symmetrische Begrenzung der Ausgangswechselspannung der Ladeeinheit führt dazu, daß keine oder nur geringe innerhalb der Toleranzen der verwendeten Bauteile zulässige, zeitlich konstante Potentialdifferenzen auftreten. Dadurch, daß die Mittel zur symmetrischen Begrenzung als gegeneinander geschaltete Dioden, insbesondere als Z-Dioden oder als eine Z-Diode mit symmetrischer Kennlinie ausgebildet sind, wird eine besonders einfache, aber dennoch wirksame Ausgestaltung der Erfindung angegeben. Die Verwendung einer Diode als Gleichrichtermittel in dem elektrischen Gerät ist äußerst kostengünstig und raumsparend. Die Maßnahme, die Ausgangswechselspannung des Ladegerätes auf etwa solche Werte zu begrenzen, die sich aus der Summe des Spannungsabfalls am Gleichrichtermittel und der Spannung des Akkus unter Berücksichtigung von etwaigen Toleranzen ergibt, bewirkt, daß unabhängig davon, ob das elektrische Gerät an die Ladeeinheit angeschlossen ist oder nicht, die Kontakte der Anschlußmittel und Anschlüsse immer eine sich zeitlich ändernde Potentialdifferenz ohne ein überlagertes Gleichspannungspotential aufweisen. Wie praktische Versuche ergeben haben, wird hierdurch die Korrosionsanfälligkeit der Kontakte um ein Vielfaches (Größenordnung 20 bis 50-faches) gegenüber den bekannten Systemen herabgesetzt. Eine konkrete, besonders vorteilhafte Ausgestaltung der Ladeschaltung ergibt sich dadurch, daß die Ladeschaltung einen Netztransformator aufweist, dessen sekundärseitige Ausgangsgröße durch Dioden symmetrisch auf solche Werte begrenzt wird, die durch die Summe der Akkumulator- und der Durchlaßspannung einer Gleichrichterdiode, die in der Zahnbürste in Serie zum Akkumulator geschaltet ist, bestimmt werden.

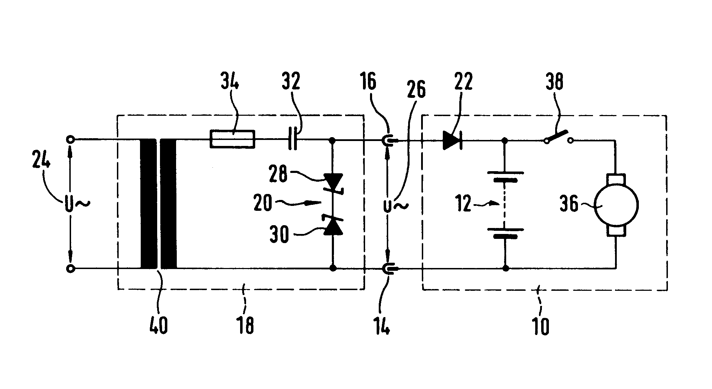

Ein Ausführunsbeispiel der Erfindung ist anhand der einzigen Figur nachfolgend beschrieben. In der Figur ist die Beschaltung eines elektrischen Gerätes 10, insbesondere eine Zahnbürste und die Ladeeinheit 18 dargestellt. Das elektrische Gerät 10 weist Mittel 14, 16 zum Anschluß an die Ladeeinheit 18 auf. Über Gleichrichtermittel 22, insbesondere eine handelsübliche Gleichrichterdiode ist das Anschlußmittel 16 mit einem Akkumulator 12, dessen zweiter Anschluß mit dem Anschlußmittel 14 in Verbindung steht, verbunden. Parallel zum Akkumulator 12 ist ein elektrischer Motor 36 zum Antrieb, beispielsweise der Zahnbürste, geschaltet. Ein Schalter 38 dient zum Ein- und Ausschalten des elektrischen Geräts 10. Die Ladeeinheit 18 weist einen Netztransformator 40 auf, dessen primärseitige Anschlüsse an eine Wechselspannung 26 zur Versorgung der Ladeeinheit 18 anschließbar sind. Sekundärseitig ist am einen Anschluß des Netztransformators 40 eine Sicherung 24 und ein Kondensator 32 in Serie geschaltet. Am sekundärseitigen Ausgang der Ladeeinheit 18 sind die beiden Anschlüsse des Netztransformators 40 über gegeneinandergeschaltete Z-Dioden 28, 30 verbunden. Durch die Z-Dioden 28, 30, die auch durch eine einzige Z-Diode mit symmetrischer Kennlinie ersetzt werden können, wird die vom Transformator gelieferte, sinusförmige Wechselspannung auf eine annähernd rechteckförmige Wechselspannung begrenzt. Ohne Anschluß des Gerätes 10 an die Ladeeinheit 18 ist die Ausgangswechselspannung 26 der Ladeeinheit 18 symmetrisch bezüglich des Grundpotentials und überlagerte Gleichspannungsanteile sind nicht vorhanden. Wird das Gerät 10 an die Ladeeinheit 18 angeschlossen, fließt während einer Halbwelle der Ladestrom. Die Spannung an den Anschlußmitteln 14, 16 sinkt während dieser Halbwelle auf einen Wert, der sich aus der Summe der Akkumulatorspannung und der Durchlaßspannung des Gleichrichtermittels 22 ergibt. Durch eine Dimensionierung der Begrenzungsmittel 20 derart, daß diese die Ausgangswechselspannung 26 gerade auf den angegebenen Wert aus Akkumulatorspannung und Durchlaßspannung der Gleichrichtermittel 22 begrenzen, wird erreicht, daß die Ausgangsspannung 26 der Ladeeinheit 18 unabhängig davon ist, ob das Gerät 10 an die Ladeeinheit 18 angeschlossen ist oder nicht. Durch diese Maßnahme wird erreicht, daß in jedem Betriebszustand der Ladeeinheit 18 an dem Ausgang eine symmetrische Wechselspannung anliegt. Der arithmetische Mittelwert dieser Spannung ist bezogen auf das Grundpotential gleich Null. Durch diese Schaltung wird eine gleichstromunterstützte Korrosion der Anschlußmittel 14, 16 bzw. der Ausgänge der Ladeeinheit 18 weitestgehend verhindert.

**Patentansprüche**

1. Gleichstrombetriebenes, elektrisches Gerät (10), wie eine Zahnbürste, ein Rasierapparat, Haarpflegegeräte, Küchenkleingeräte oder ähnliches, mit einem wiederaufladbaren Akkumulator 12 und mit Mitteln 14, 16 zum Anschluß an die Ausgänge einer Ladeeinheit 18, die ihrerseits von einer Wechselspannung (24) gespeist wird, dadurch gekennzeichnet, daß die Ladeeinheit (18) Mittel (20) zur symmetrischen Begrenzung der Ausgangswechselspannung (26) und das elektrische Gerät (10) Gleichrichtermittel (22) aufweisen.

2. Gerät nach Anspruch 1, dadurch gekennzeichnet, daß die Ausgangswechselspannung (26) der Ladeeinheit (18) über gegeneinander geschaltete Dioden (28, 30), insbesondere Z-Dioden, oder über eine Z-Diode mit symmetrischer Kennlinie begrenzt wird.

3. Gerät nach Anspruch 1, dadurch gekennzeichnet, daß zwischen den Anschlußmitteln (14, 16) und dem Akkumulator (12) eine Diode (22) angeordnet ist.

4. Gerät nach Anspruch 1 oder 2, dadurch gekennzeichnet, daß die Ausgangswechselspannung (26) des Ladegerätes (18) auf etwa solche Werte begrenzt wird, die sich aus der Summe des Spannungsabfalls an dem Gleichrichtermittel (22) und der Spannung des Akkumulators (12) unter Berücksichtigung von etwaigen Toleranzen ergeben.

5. Ladeschaltung für eine akkubetriebene elektrische Zahnbürste, die über Kontakte mit einer Ladeeinheit (18) verbindbar ist, dadurch gekennzeichnet, daß die Ladeeinheit (18) einen Netztransformator (40) aufweist, dessen sekundärseitige Ausgangsgröße durch Z-Dioden (28, 30) symmetrisch auf solche Werte begrenzt wird, die durch die Summe aus der Akkumulator- und aus der Durchlaßspannung einer Gleichrichterdiode (22), die in der Zahnbürste in Serie zum Akkumulator (12) geschaltet ist, bestimmt werden.